# EUROPÄISCHE PATENTSCHRIFT

(11) **EP 1 599 680 B1**
(45) Veröffentlichungstag und Bekanntmachung des Hinweises auf die Patenterteilung: **06.08.2008**
(21) Anmeldenummer: 04713014.1
(22) Anmeldetag: 20.02.2004
(51) Int. Cl.: F16D 65/14

(54) **SCHEIBENBREMSE FÜR EIN FAHRZEUG, INSBESONDERE EIN NUTZFAHRZEUG**
DISC BRAKE FOR A VEHICLE, IN PARTICULAR A COMMERCIAL VEHICLE
FREIN A DISQUE POUR VEHICULE, EN PARTICULIER POUR VEHICULE UTILITAIRE

(30) Priorität: 24.02.2003 DE 10307734
(43) Veröffentlichungstag der Anmeldung: 30.11.2005
(73) Patentinhaber: KNORR-BREMSE SYSTEME FÜR NUTZFAHRZEUGE GMBH, 80809 München (DE)
(72) Erfinder: LINKE, Tobias, 61118 Bad Vilbel (DE)
(74) Vertreter: Mattusch, Gundula
(86) Internationale Anmeldenummer: PCT/EP2004/001668
(87) Internationale Veröffentlichungsnummer: WO 2004/074705

(56) Entgegenhaltungen:
- WO-A-95/19511
- WO-A-96/36819
- US-B1- 6 311 809

## Beschreibung

Die vorliegende Erfindung betrifft eine Scheibenbremse für ein Fahrzeug, insbesondere ein Nutzfahrzeug gemäß dem Oberbegriff des Anspruchs 1.

Bei einer derartigen, vorzugsweise druckluft- oder elektronisch betätigbaren und insbesondere in Nutzfahrzeuge einbaubaren Scheibenbremse weist die Zuspannvorrichtung den Hebel, eine daran befestigte Lagerschale und die Wälzrolle auf, die parallel zur Bremsscheibe verläuft und eine Schwenkachse für den Hebel bildet, wobei die Wälzrolle in der Lagerschale einliegt.

Zur axialen und radialen Fixierung der Wälzrolle ist es bekannt (WO 95/19 511 A), an der Brücke Lagerlaschen vorzusehen, die üblicherweise aus Blech gebildet sind und in denen die Wälzrolle gehalten ist. Die mit dem Hebel vernietete, gleichfalls aus Blech bestehende Lagerschale bildet zusammen mit einer entsprechend ausgeformten Auflagefläche das Lager für die Wälzrolle.

Allerdings ergeben sich Nachteile, insbesondere bei der Montage, die sich umständlich und damit kontraproduktiv zu einer rationellen, kostengünstigen Fertigung darstellt.

Da eine Vormontage von Baugruppen erfolgt, die in einer Endmontage zusammengefügt werden, bedeutet jede separat zu fertigende Baugruppe einen entsprechenden Fertigungsaufwand mit den sich daraus ergebenden Kosten.

Auch funktional läßt die bekannte Scheibenbremse Wünsche offen, da eine exakte Zuordnung der Wälzrolle zum Hebel durch die Befestigung der Wälzrolle an der Brücke nicht gewährleistet ist.

Eine Scheibenbremse gemäß dem Oberbegriff ist aus der US 6 311 809 B1 bekannt, bei der sich der Hebel an Drehlagern abstützt, die am Bremssattel anliegen. Mit zunehmender Bremsbetätigung besteht die Gefahr, dass die als Nadellager ausgebildeten Drehlager aus ihrem Anlagebereich herausgeführt werden, so dass die Funktionsfähigkeit zumindest eingeschränkt ist.

Aus der WO 96/36819 A ist ebenfalls eine gattungsgemäße Scheibenbremse bekannt. Der Wälzrollenhalter besteht dabei aus Lagerschalen, die stirnseitig an der Wälzrolle anliegende Vorsprünge aufweisen, durch die eine axiale Verschiebesicherung der Wälzrolle gegeben ist.

Zur radialen Sicherung der Wälzrolle übergreift der Wälzrollenhalter, der im übrigen auch als Lagerschale fungiert, die Wälzrolle über eine Winkel > 180°.

Der vorliegenden Erfindung liegt die Aufgabe zugrunde, eine Scheibenbremse der gattungsgemäßen Art so weiter zu entwickeln, daß sie kostengünstiger herstell- und montierbar ist und ihre Funktion verbessert wird.

Diese Aufgabe wird durch eine Scheibenbremse gelöst, die die Merkmale des Anspruchs 1 aufweist.

Durch diese konstruktive Ausbildung einer Scheibenbremse kann die Hebelbaugruppe komplett vormontiert werden, während an anderen Bauteilen, bspw. der Brückenbaugruppe nunmehr keine Montagearbeiten in diesem Sinne vorzunehmen sind. Hieraus ergeben sich naturgemäß Fertigungsvorteile, weil auf eine Montagebearbeitung der Brücke vollständig verzichtet werden kann.

Insbesondere unter dem Aspekt, daß derartige Scheibenbremsen in großen Stückzahlen hergestellt werden, kommt der Erfindung eine besondere Bedeutung zu.

Dies trifft gleichermaßen auf eine Endmontage zu, bei der die Scheibenbremsen zusammengebaut werden. Auch hierbei zeigt sich eine Vereinfachung im Arbeitsablauf mit der Folge einer merkbaren Kostenreduzierung.

Auch die Funktionsfähigkeit der Scheibenbremse wird durch die erfindungsgemäße Ausgestaltung verbessert, da eine sehr genaue Zuordnung der Wälzrolle zum Hebel möglich ist. Dadurch werden toleranzbedingte Betätigungsprobleme der Zustellvorrichtung insgesamt vermieden, wodurch sich die Funktionssicherheit der Scheibenbremse erhöht.

Üblicherweise ist die Lagerschale aus Blech gebildet, vorzugsweise als Stanzteil, so daß die Anbringung der Lagerlaschen ohne zusätzlichen Fertigungsaufwand möglich ist, d. h., die Lagerlaschen können beim Stanzen der Lagerschale mit angeformt werden.

Eine besonders einfache Montage ergibt sich dadurch, daß zur Festlegung der Wälzrolle am Hebel der separate Wälzrollenhalter vorgesehen ist, der die Wälzrolle im Bereich der Lagerzapfen an der der Lagerschale gegenüber liegenden Seite hält und im übrigen mit dem Hebel durch Vernieten fest verbunden ist.

Dieser Wälzrollenhalter ist so ausgebildet, daß er gleichzeitig die Funktion der Rückführung von Drehlagerkäfigen übernimmt, mit denen der schwenkbare Hebel an einem Bremssattel gelagert ist.

Im Fall, daß bei einer entsprechenden Ausführung der Scheibenbremse Drehlager zum Einsatz kommen, sind also die Käfigrückführung und die Halterung der Wälzrolle mit einem einzigen Bauteil möglich, das sowohl als einfaches Blech-Stanzteil herstellbar wie auch mit geringem Aufwand montierbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer erfindungsgemäßen Scheibenbremse in einem Querschnitt,
- Figur 2: eine Zustellvorrichtung der Scheibenbremse in einer Explosivdarstellung,
- Figur 3: Baugruppen der Scheibenbremse, teilweise fertig montiert, ebenfalls in einer Explosivdarstellung,
- Figur 4: die Baugruppen nach Figur 3 in einer montierten Stellung in einer perspektivischen Ansicht.

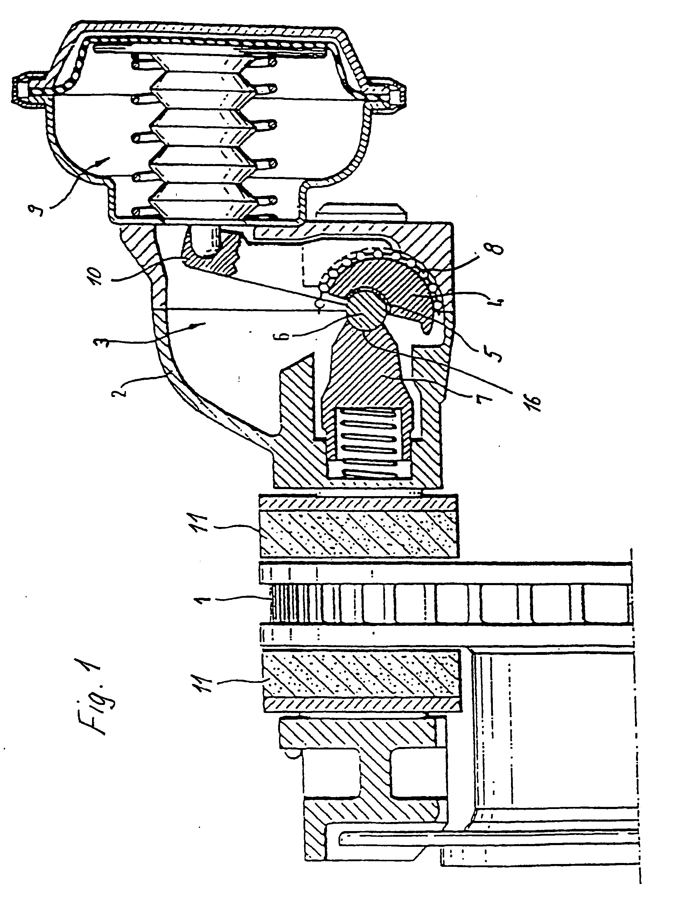

In der Figur 1 ist in schematischer Darstellung eine Scheibenbremse für ein Fahrzeug, insbesondere ein Nutzfahrzeug, in einem Halbschnitt dargestellt, die eine Bremsscheibe 1 aufweist, die an einer nicht dargestellten Achse des Nutzfahrzeuges befestigt ist und von einem Bremssattel 2 umfaßt ist, der in Richtung der Bremsscheibe 1 verschiebbar ist.

Im Bremssattel 2 ist eine Zuspannvorrichtung 3 angeordnet, mit der bei einer über einen vorzugsweise pneumatisch betätigten Bremszylinder 9 ausgelösten Bremsung Bremsbeläge 11 an die Bremsscheibe 1 drückbar sind.

Hierzu greift die Zuspannvorrichtung 3 an zwei nicht dargestellte, parallel und mit Abstand zueinander in einer Brücke 7 angeordnete Stellspindeln an.

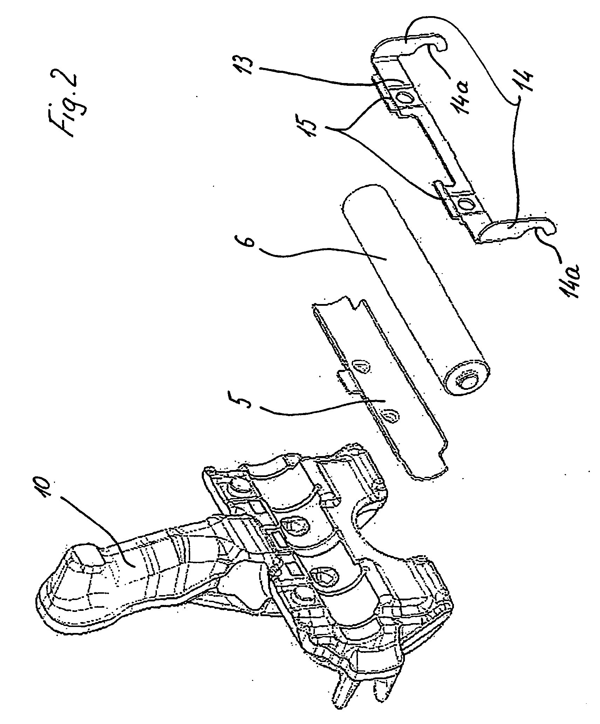

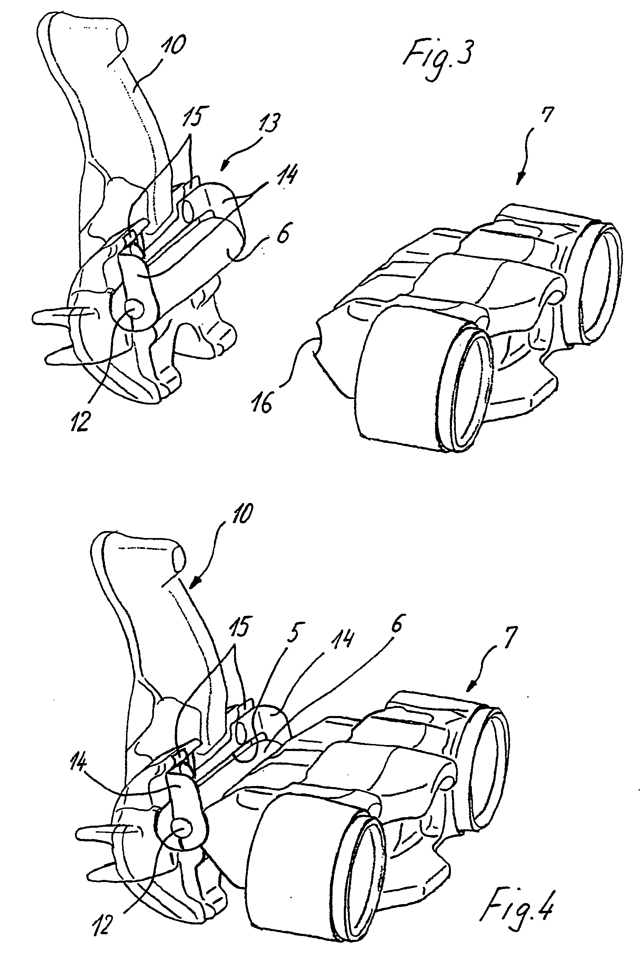

Die Zuspannvorrichtung 3 ist insbesondere auch in den Figuren 2 bis 4 sehr deutlich erkennbar. Daran ist zu sehen, daß sie einen Hebel 10 aufweist, der mit dem Bremszylinder 9 in Wirkverbindung steht und bei Betätigung des Bremszylinders 9 in Richtung der Bremsscheibe 1 schwenkbar um eine Walzenrolle 6 ist, die parallel zur Ebene der Bremsscheibe 1 verläuft.

Im Bremssattel 2 ist ein Drehlager 8 vorgesehen, an dem sich der in diesem Bereich als Exzenter 4 ausgebildete Hebel 10 abstützt.

Erfindungsgemäß ist die Wälzrolle 6 als separates Bauteil axial und radial gesichert am Hebel 10 befestigt.

Dabei ist mit dem Hebel 10 eine Lagerschale 5 fest verbunden, die die Walzenrolle 6 bereichsweise umgreift, während die Wälzrolle 6 sich andererseits an einer an deren Kontur angepaßten Aufnahme 16 der Brücke 7 abstützt, so daß diese Aufnahme 16 und die Lagerschale 5 gemeinsam mit der Wälzrolle 6 ein Lager bilden.

Zur Befestigung der Wälzrolle 6 am Hebel 10 ist ein Wälzrollenhalter 13 vorgesehen, der sich über die Länge der Wälzrolle 6 erstreckt und mit dem Hebel 10 fest verbunden ist.

An beiden Enden weist der Wälzrollenhalter 13 abgewinkelte Lagerlaschen 14 auf, die mit Ausnehmungen 14a versehen sind, in denen jeweils ein Lagerzapfen 12 der Wälzrolle 6 einliegt, wobei die Lagerlaschen 14 die Lagerzapfen 12 auf der der Lagerschale 5 gegenüber liegenden Seite umgreifen.

Wie insbesondere die Figur 2 sehr deutlich wiedergibt, ist der Wälzrollenhalter 13 mit in Form von Stegen versehenen Käfigrückführungen 15 versehen, mit denen die Drehlager 8 beim Zurückschwenken des Hebels 10 in eine Ausgangsstellung ebenfalls in eine Ausgangsstellung gedrückt werden.

### Bezugszeichenliste

- 1: Bremsscheibe
- 2: Bremssattel
- 3: Zuspannvorrichtung
- 4: Exzenter
- 5: Lagerschale
- 6: Walzenrolle
- 7: Brücke
- 8: Drehlager
- 9: Bremszylinder
- 10: Hebel
- 11: Bremsbeläge
- 12: Lagerzapfen
- 13: Wälzrollenhalter
- 14: Lagerlaschen
- 14a: Ausnehmungen
- 15: Käfigrückführungen

## Patentansprüche

1. Scheibenbremse für ein Fahrzeug, insbesondere ein Nutzfahrzeug, mit einer in einem Bremssattel (2) angeordneten Zuspannvorrichtung (3), mit der bei einer Bremsung über wenigstens eine oder zwei parallel und mit Abstand zueinander in einer Brücke (7) angeordnete Stellspindeln ein Bremsbelag (11) an eine Bremsscheibe (1) drückbar ist, wobei die Zuspannvorrichtung (3) eine Wälzrolle (6) aufweist, die an einem im Abstützbereich mit Drehlagern (8) des Bremssattels (2) als Exzenter (4) ausgebildeten schwenkbaren Hebel (10) der Zuspannvorrichtung (3) anliegt und als separates Bauteil durch einen am Hebel (10) befestigten Wälzrollenhalter (13) axial und radial gesichert befestigt ist, und der Wälzrollenhalter (13) mit Käfigrückführungen (15) versehen ist, mit denen bei einem Zurückschwenken des Hebels (10) in eine Ausgangsstellung die Drehlager (8) ebenfalls in eine Ausgangsstellung zurück drückbar sind, **dadurch gekennzeichnet, dass** der Wälzrollenhalter (13) zur Halterung der Wälzrolle (6) an beiden Enden jeweils eine Lagerlasche (14) aufweist, in der ein konzentrisch am jeweiligen Ende der Wälzrolle (6) angebrachter Lagerzapfen (12) einliegt.

2. Scheibenbremse nach Anspruch 1, **dadurch gekennzeichnet, dass** der Wälzrollenhalter (13) sich über die gesamte Länge der Wälzrolle (6) erstreckt.

3. Scheibenbremse nach Anspruch 1 oder 2, **dadurch gekennzeichnet, dass** die Lagerlaschen (14) jeweils eine Ausnehmung (14a) aufweisen, die die Lagerzapfen (12) der Wälzrolle (6) auf der der Lagerschale (5) gegenüberliegenden Seite umgreifen.

4. Scheibenbremse nach einem der vorhergehenden Ansprüche, **dadurch gekennzeichnet, dass** die Käfigrückführungen (15) als Stege ausgebildet sind.

## Claims

1. Disc brake for a vehicle, in particular a commercial vehicle, comprising a brake applicator device (3) associated with a brake calliper (2), by means of which a brake lining (11) may be pressed against a brake disc (1) via at least one adjusting spindle or via two adjusting spindles disposed in parallel to and spaced from to each other in a bracket (7) in the event of brake application, wherein said brake applicator device (3) includes a rolling element (6) bearing against a pivotable lever (10) of said brake applicator device (3), which lever is formed as eccentric (4) in the supporting zone with swivelling supports (8) of said brake calliper (2) and is fastened as separate element for axial and radial locking by means of a rolling element retainer (13) fastened on said lever (10), and wherein said rolling element retainer (13) is provided with cage returning means (15) by means of which said rolling element supports (8) may equally be pressed back into an initial position when said lever (10) is pivoted back into an initial position, **characterised in that** said rolling element retainer (13) comprises one respective bearing strap (14) on both ends for retaining said rolling element (6), in which a journal (12) is engaged which is concentrically provided on the respective end of said rolling element (6).

2. Disc brake according to Claim 1, **characterised in that** said rolling element retainer (13) extends over the entire length of said rolling element (6).

3. Disc brake according to Claim 1 or 2, **characterised in that** said bearing straps (14) present each a recess (14a) enclosing said journals (12) of said rolling element (6) on the side opposite to the bearing shell (5).

4. Disc brake according to Claim 1, **characterised in that** said cage returning means (15) are configured in the form of webs.

## Revendications

1. Frein à disque pour un véhicule, en particulier pour un véhicule utilitaire, comprenant un dispositif de serrage de frein (3) affecté à un étrier de frein (2), moyennant duquel une garniture de frein (11) se peut presser contre un disque de frein (1) via au moins une broche de réglage or via deux broches de réglage disposées l'une en parallèle à l'autre à un écart l'un de l'autre dans un pont (7) au cas de serrage du frein, dans lequel ledit dispositif de serrage de frein (3) renferme un rouleau roulant (6) portant contre un levier pivotant (10) dudit dispositif de serrage de frein (3), ce levier étant formé sous forme d'un excentrique (4) dans la zone d'appui à coussinets de pivotement (8) dudit étrier de frein (2) et fixé, en tant qu'élément séparé, moyennant un support de rouleau roulant (13) fixé audit levier (10) pour son blocage en sens axial et radial, et dans lequel ledit support de rouleau roulant (13) est muni des moyens de retour de la cage (15), moyennant desquelles lesdits supports de rouleau roulant (8) se peuvent également presser en retour en une position de départ, quand ledit levier (10) est pivoté en retour en sa position de départ, **caractérisé en ce que** ledit support de rouleau roulant (13) comprend un collier de coussinet respectif (14) à ses deux extrémités à tenir ledit rouleau roulant (6), dans lequel un tourillon (12) est mis en prise, qui est formé, en position concentrique, à l'extrémité respective dudit rouleau roulant (6).

2. Frein à disque selon la revendication 1, **caractérisé en ce que** ledit support de rouleau roulant (13) s'étend sur toute la longueur dudit rouleau roulant (6).

3. Frein à disque selon la revendication 1 ou 2, **caractérisé en ce que** chacun desdits colliers de coussinet (14) présente un évidement (14a) renfermant lesdits tourillons (12) dudit rouleau roulant (6) du côté opposé à ladite coquille de coussinet (5).

4. Frein à disque selon la revendication 1, **caractérisé en ce que** lesdits moyens de retour de la cage (15) sont configurés sous forme de brides.
